# FASCICULE DE BREVET EUROPEEN

(11) **EP 3 777 078 B1**
(45) Date de publication et mention de la délivrance du brevet: **20.08.2025**
(21) Numéro de dépôt: 19716961.8
(22) Date de dépôt: 05.03.2019
(51) Int. Cl.: H04L 9/40, H04L 61/5014

(54) **GESTION SÉCURITAIRE D'UN RÉSEAU DE COMMUNICATION LOCAL COMPRENANT AU MOINS UN OBJET COMMUNICANT**
SICHERE VERWALTUNG EINES LOKALEN KOMMUNIKATIONSNETZES MIT MINDESTENS EINEM KOMMUNIZIERENDEN OBJEKT
SECURE ADMINISTRATION OF A LOCAL COMMUNICATION NETWORK COMPRISING AT LEAST ONE COMMUNICATING OBJECT

(30) Priorité: 26.03.2018 FR 1852612
(43) Date de publication de la demande: 17.02.2021
(73) Titulaire: Orange, 92130 Issy-les-Moulineaux (FR)
(72) Inventeur: BOUVET, Eric, 92326 CHÂTILLON CEDEX (FR); LE GUILLOU, Xavier, 92326 CHÂTILLON CEDEX (FR)
(86) Numéro de dépôt international: PCT/FR2019/050487
(87) Numéro de publication internationale: WO 2019/186005

(56) Documents cités:
- US-A1- 2016 088 021
- US-A1- 2016 112 374
- US-A1- 2017 118 240

## Description

### 1. Domaine de l'invention

Le domaine de l'invention est celui des réseaux de communication locaux, notamment, mais non exclusivement, des réseaux de communication domestiques, comprenant un équipement ou passerelle d'accès et une pluralité d'objets communicants, tels que des ordinateurs, tablettes, téléphones intelligents (en anglais « smartphones »), mais également des caméras de type webcams, des stations météo, des capteurs, des thermostats, etc.

Plus précisément, l'invention concerne la gestion d'une politique de sécurité au sein d'un tel réseau de communication local.

### 2. Art antérieur et ses inconvénients

Actuellement, lorsqu'un objet communicant est connecté dans un réseau de communication, et souhaite échanger des données sur ce réseau, il lui est nécessaire d'obtenir certains paramètres de configuration, et notamment une adresse IP (pour l'anglais « Internet Protocol »). Le protocole de configuration automatique le plus couramment utilisé pour ce faire est le protocole DHCP (pour l'anglais « Dynamic Host Configuration Protocol », protocole de configuration dynamique des hôtes).

Classiquement, l'objet communicant diffuse sur le réseau un datagramme *DHCP DISCOVER.* A réception, un serveur DHCP, présent par exemple dans la passerelle d'accès au réseau, envoie en réponse à l'objet communicant une offre *DHCP OFFER,* s'il est en mesure de proposer une adresse sur le réseau auquel appartient l'objet communicant. Une telle offre DHCP comporte l'adresse IP du serveur, ainsi que l'adresse IP et le masque de sous-réseau qu'il propose à l'objet communicant.

S'il retient cette offre, l'objet communicant diffuse sur le réseau un datagramme de requête DHCP (*DHCP REQUEST*), qui comporte l'adresse IP du serveur et celle qui vient de lui être proposée. Elle a pour effet, notamment, de demander au serveur DHCP l'assignation de cette adresse, et l'envoi éventuel des valeurs de certains paramètres.

Le serveur DHCP élabore un datagramme d'accusé de réception (*DHCP ACK* pour *acknowledgement*) qui assigne à l'objet communicant l'adresse IP et son masque de sous-réseau, la durée du bail de cette adresse, et éventuellement d'autres paramètres, parmi lesquels l'adresse IP de la passerelle par défaut, et les adresses IP des serveurs DNS.

Le serveur DHCP, qui est le plus souvent intégré dans la passerelle d'accès au réseau local (la passerelle résidentielle dans le cas d'un réseau domestique), alloue ainsi des paramètres de configuration, de même nature et de même portée, à tous les objets communicants du réseau qui en font la demande, leur permettant, d'une part, d'accéder aux ressources et données du réseau local, et d'autre part, d'accéder au réseau mondial Internet.

Si ceci posait peu de problèmes à la genèse des réseaux locaux, lorsque seuls un ou deux ordinateurs personnels de type PC étaient présents sur le réseau, la multiplication du nombre d'objets communicants, de tous types, et de toutes provenances, pose à cette approche des problèmes de sécurité.

En effet, le risque est accru que l'un de ces objets communicants présente une ou plusieurs failles de sécurité, susceptibles de permettre à un individu malveillant de pénétrer sur le réseau local, par exemple par installation sur l'objet communicant d'un logiciel malveillant (en anglais « malware »), en vue d'y opérer des activités malveillantes, telles que du vol de données, ou une attaque de déni de service par exemple.

L'ajout par un utilisateur d'un objet communicant sur un réseau de communication local, qu'il soit connecté en mode filaire par un câble Ethernet^{®}, ou sans fil sur un réseau de type Wi-Fi en mode WPA2 (pour « Wi-Fi Protected Access 2 »), garantit, en règle générale, que cet objet communicant a été volontairement connecté par l'administrateur du réseau.

Cependant, cet administrateur ou utilisateur peut ne pas avoir connaissance de l'existence de failles de sécurité sur cet objet communicant, et ce d'autant plus que ces failles de sécurité sont associées à une version donnée de logiciel embarqué sur l'objet communicant. Ainsi, un objet a priori fiable peut cesser de l'être, suite à une mise à jour de son « firmware » (en français « micrologiciel », ou « logiciel embarqué »), sans que l'utilisateur ne s'en rende compte.

Pour résoudre ce problème, il a été envisagé de classer les objets communicants d'un réseau de communication local en catégories de confiance (i.e. la catégorie des objets sûrs, la catégorie des objets peu sûrs, etc.), et d'allouer de façon statique des règles d'accès communes à tous les objets communicants d'une même catégorie de confiance, au sein du réseau. On dispose ainsi d'un mécanisme de protection permettant d'isoler de façon statique un groupe d'équipements ou d'objets communicants.

Cependant, il s'avère en pratique complexe de définir des règles de sécurité ou d'accès qui puissent être communes à tous les objets communicants d'une même catégorie de confiance, ces règles d'accès ou de sécurité étant en pratique intimement liées aux spécificités et fonctions d'un objet communicant particulier. Ainsi, une webcam et une station météo peuvent appartenir à une même catégorie de confiance, mais avoir des besoins en termes d'activité et de connexion très différentes : par exemple, la webcam peut, en fonctionnement normal, envoyer des flux vidéos correspondant à la surveillance d'un domicile à une adresse externe au réseau de communication local, tandis qu'une telle pratique correspond a priori à un fonctionnement déviant pour une station météo. On connaît par exemple du document de brevet US2017/0118240 A1 un système de détection de menaces de sécurité dans un réseau local, permettant d'appliquer une ou plusieurs règles de sécurité prédéterminées sur détection d'une menace ou d'un comportement malveillant.

Il existe donc un besoin d'une technique de gestion sécuritaire d'un réseau de communication local qui ne présente pas ces différents inconvénients de l'art antérieur. Il existe notamment un besoin d'une telle technique qui permette de mieux tenir compte des spécificités en besoins de communication de chaque objet communicant.

### 3. Exposé de l'invention

L'invention répond à ce besoin en proposant un procédé de gestion d'un réseau de communication local selon la revendication 1.

Ainsi, l'invention repose sur une approche tout à fait nouvelle et inventive de la gestion des règles de sécurité qui s'appliquent aux équipements d'un réseau de communication local, tel qu'un réseau domestique par exemple.

En effet, l'invention propose de définir des règles de sécurité spécifiques à chaque objet communicant, en fonction des besoins de communication de l'objet considéré.

Au cours d'une première phase d'apprentissage, qui est initialisée sur détection de la connexion d'un nouvel objet communicant dans le réseau, ou sur détection de la mise à jour du firmware (ou micrologiciel) d'un objet communicant déjà présent dans le réseau, on observe les connexions nécessaires à un fonctionnement qualifié de « normal » de l'objet connecté vers son écosystème réseau, comprenant les autres équipements du réseau de communication local, mais également les équipements distants d'un réseau de communication étendu auquel l'objet communicant peut accéder via l'équipement d'accès ou la passerelle résidentielle. On fait en effet l'hypothèse que, lors de sa connexion initiale au réseau de communication local, l'objet
communicant a un comportement que l'on peut qualifier de « normal » ou « sain », et n'est donc pas a priori configuré pour effectuer des activités malveillantes.

Au cours de cette phase d'apprentissage, on observe donc toutes les interactions de l'objet communicant avec d'autres équipements, en termes de nature, volume et fréquence des données entrantes et sortantes, et adresses des équipements contactés. Les données d'observation sont par exemple enregistrées dans une base de données, puis analysées par programmation logique inductive, ou logique floue, ou toute autre méthode d'apprentissage automatique (en anglais « machine learning »), afin d'en déduire un ensemble de préceptes caractéristiques d'un fonctionnement « normal » de l'objet communicant.

On crée alors, sur la base de ces préceptes, un ensemble d'une ou plusieurs règles de sécurité spécifique(s) à l'objet communicant dont le fonctionnement a été observé. Ces règles de sécurité sont *a priori* uniquement applicables à cet objet communicant.

Selon un premier aspect, la ou les règle(s) de sécurité associée(s) audit objet communicant comprennent une liste d'au moins un équipement dudit réseau de communication local et/ou dudit réseau de communication étendu auquel ledit objet communicant est autorisé à accéder.

On peut ainsi établir une liste blanche (en anglais « white list ») des adresses que l'objet communicant est autorisé à contacter dans le cadre d'une activité normale. Tous les autres accès qu'il pourrait tenter d'effectuer sont considérés comme appartenant à une liste noire (en anglais « black list »), qui peut ou non être définie.

Selon un autre aspect, la ou les règle(s) de sécurité associée(s) audit objet communicant comprennent un volume maximum de données que l'objet communicant est autorisé à échanger.

En effet, un objet communicant de type capteur de température par exemple n'est destiné à échanger que de faibles quantités de données, par exemple sous forme de paquets de données contenant la température mesurée, éventuellement horodatée. Il est donc possible de définir une taille maximale des paquets de données que le capteur doit normalement émettre, exprimée en octets ou en kilooctets, ou un volume maximum de données autorisé, correspondant à l'ensemble des paquets de données qu'il doit normalement envoyer, sur une plage temporelle définie, par exemple par heure.

L'envoi par ce capteur d'un volume de données supérieur à ce volume maximum autorisé par la règle de sécurité établie est indicatif d'un comportement déviant, ou d'une activité malveillante.

Selon un autre aspect, la ou les règle(s) de sécurité associée(s) audit objet communicant comprennent un nombre maximum de requêtes d'accès que ledit objet communicant est autorisé à émettre. Un envoi massif de requêtes par un objet communicant peut en effet être indicatif d'un comportement déviant, tel qu'une participation à une attaque de botnet (de l'anglais, contraction de « robot » et « réseau »).

Selon un autre aspect, la phase d'apprentissage a une durée paramétrable par un gestionnaire du réseau de communication local. Cette durée peut prendre la forme d'une durée temporelle (nombre d'heures, nombre de jours), ou d'un nombre de requêtes qui vont être émises par l'objet communicant. Elle peut être paramétrée par le gestionnaire du réseau local (par exemple l'utilisateur administrateur de ce réseau, ou un gestionnaire du fournisseur d'accès de ce réseau local) en fonction du type d'objet communicant, de l'algorithme d'apprentissage utilisé pour la création des règles de sécurité...

Selon encore un autre aspect, un tel procédé de gestion comprend une transmission, à au moins un équipement du réseau de communication étendu, de données relatives aux interactions observées pour l'objet communicant. Ainsi, il est possible de mutualiser la phase d'apprentissage, par exemple au niveau du réseau de l'opérateur, pour plusieurs objets communicants de même nature, connectés à plusieurs réseaux de communication locaux distincts. Pour ce faire, l'équipement d'accès d'un premier réseau de communication local peut transmettre des données relatives aux interactions observées pour un objet communicant donné à un serveur de collecte du réseau de communication étendu. Ce dernier peut centraliser les données collectées dans une pluralité de réseaux de communication locaux, pour ce type d'objet communicant, en vue d'enrichir, et éventuellement abréger, la phase d'apprentissage qui sera initiée pour ce type d'objet communicant dans un autre réseau de communication local.

Selon un aspect corollaire, la création de la ou les règle(s) de sécurité tient également compte de données relatives à des interactions observées pour un objet communicant de même type que ledit objet communicant, dans au moins un autre réseau de communication local.

Ces informations sont par exemple reçues par l'équipement d'accès ou la passerelle résidentielle, en provenance d'un serveur de collecte, géré par l'opérateur du réseau de communication étendu. Elles permettent d'enrichir l'apprentissage, et éventuellement d'en réduire la durée.

Selon un aspect de l'invention, en cas de détection d'une interaction dudit objet communicant avec au moins un autre équipement dudit réseau local et/ou au moins un équipement d'un réseau de communication étendu accessible via ledit équipement d'accès contraire à ladite règle de sécurité créée, il comprend une étape de blocage de ladite interaction.

Ainsi, dès que l'on observe un comportement déviant de l'objet communicant, qui ne correspond pas aux interactions observées en fonctionnement « normal » de ce dernier, il peut être isolé, au sein du réseau de communication local. Ce blocage peut consister par exemple en une interdiction d'accès à un service de configuration de type UPnP-IGD (« Universal Plug and Play-Internet Gateway Device »), ou en une interdiction de routage vers un autre équipement du réseau de communication local, en fonction de la règle de sécurité créée.

Selon un autre aspect, un tel procédé comprend également une mémorisation de l'interaction bloquée dans un journal d'interactions suspectes et/ou une alerte d'un utilisateur dudit objet communicant.

Ce journal d'interactions suspectes pourra avantageusement être consulté par l'utilisateur ou l'administrateur du réseau de communication local. Il est également possible que la détection d'un comportement déviant d'un objet communicant déclenche automatiquement l'émission d'une alerte vers l'utilisateur ou l'administrateur du réseau de communication local, par exemple par envoi d'un message vers ce dernier. Une telle alerte peut également être déclenchée quand un certain nombre d'interactions suspectes a été mémorisé dans le journal.

Selon encore un aspect, un tel procédé comprend une modification de ladite règle de sécurité créée, en cas de présence d'un utilisateur dudit objet communicant au sein dudit réseau de communication local. Ainsi, il est possible par exemple d'assouplir les règles de sécurité, quand on détecte que l'utilisateur est physiquement présent dans le réseau de communication local, et donc à même de surveiller le comportement de ses objets communicants. On évite ainsi des problèmes liés à une sécurité trop stricte, qui peut avoir un impact négatif sur l'utilisation des services du réseau de communication local. Selon les techniques de l'art antérieur, les règles de sécurité associées à un objet communicant sont statiques, sans qu'il soit prévu de les adapter, par exemple de les renforcer, en cas d'absence de l'utilisateur de son domicile. Il peut donc être avantageux de prévoir des règles de sécurité strictes, qui s'appliquent par défaut lorsque l'utilisateur n'est pas chez lui, mais de pouvoir les assouplir et les alléger quand la présence d'un utilisateur habilité est détectée à proximité de l'objet communicant, ou dans l'écosystème du réseau de communication local.

L'invention concerne également un produit programme d'ordinateur selon la revendication 11.

Un autre aspect propose un support d'enregistrement lisible par un ordinateur sur lequel est enregistré un programme d'ordinateur comprenant des instructions de code de programme pour l'exécution des étapes du procédé de gestion d'un réseau de communication local selon l'invention tel que décrit ci-dessus.

Un tel support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, un tel support d'enregistrement peut être un support transmissible tel qu'un signal électrique ou optique, qui peut être acheminé via un câble électrique ou optique, par radio ou par d'autres moyens, de sorte que le programme d'ordinateur qu'il contient est exécutable à distance. Le programme selon l'invention peut être en particulier téléchargé sur un réseau par exemple le réseau Internet.

Alternativement, le support d'enregistrement peut être un circuit intégré dans lequel le programme est incorporé, le circuit étant adapté pour exécuter ou pour être utilisé dans l'exécution du procédé de contrôle d'affichage précité.

L'invention concerne également un équipement d'accès à un réseau de communication local selon la revendication 12.

Selon un aspect complémentaire, un tel équipement d'accès est intégré dans une passerelle résidentielle.

L'équipement d'accès et le programme d'ordinateur correspondants précités présentent au moins les mêmes avantages que ceux conférés par le procédé de gestion d'un réseau de communication local selon la présente invention.

### 4. Liste des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
- la **figure 1** présente une vue schématique d'un réseau local de communication et des différents objets communicants qui y sont connectés, selon un mode de réalisation de l'invention;
- la **figure 2** présente sous forme de logigramme les différentes étapes du procédé de gestion selon un mode de réalisation de l'invention;
- la **figure 3** propose un schéma synoptique d'un équipement d'accès ou d'une passerelle résidentielle mettant en œuvre le procédé de la **figure 2****.**

### 5. Description détaillée de modes de réalisation de l'invention

Le principe général de l'invention repose sur l'établissement de règles de sécurité spécifiques à chaque objet communicant d'un réseau de communication local, en fonction de ses besoins en communication observés lors d'une phase d'apprentissage. Lors de cette phase d'apprentissage, aucune mesure restrictive de sécurité n'est appliquée à l'objet communicant, dont on considère qu'il a, à l'origine, un comportement que l'on peut qualifier de sain, ou normal, i. e. non-déviant. Cette phase d'apprentissage repose par exemple sur un mécanisme de type « machine learning » (pour le français « apprentissage automatique»), et permet de déduire un certain nombre de règles de sécurité à associer à l'objet communicant. Elle peut mettre en œuvre une programmation logique inductive (PLI), de la logique floue, etc.

On s'attache plus en détail dans la suite de ce document à décrire la mise en œuvre d'un mode de réalisation de l'invention dans le cadre d'un réseau domestique, chez un utilisateur particulier. L'invention s'applique bien sûr également à tout autre type de réseau de communication local (LAN, pour « Local Area Network »), auquel une pluralité d'équipements de communication sont connectés.

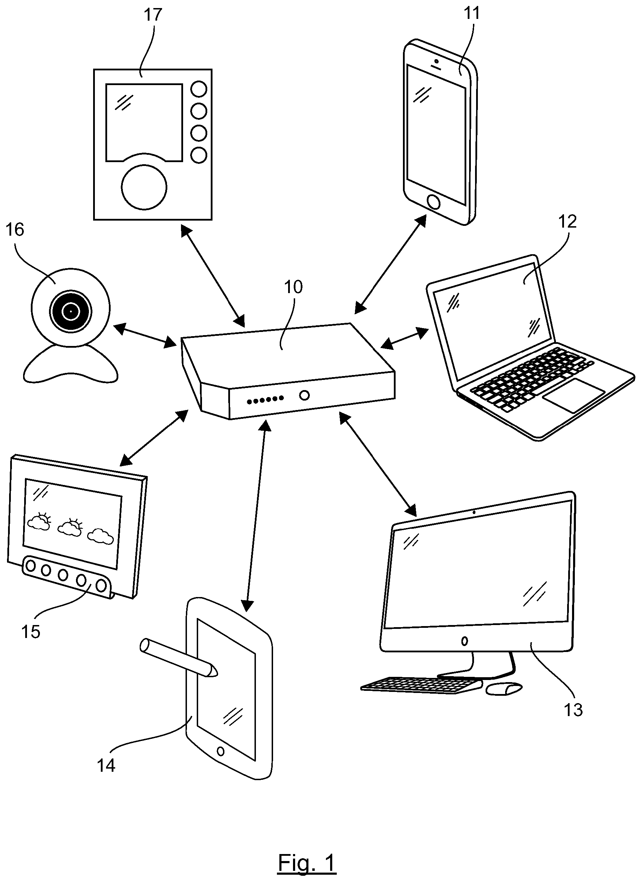

Dans un tel réseau domestique, représenté schématiquement sur la **figure 1****,** une passerelle résidentielle HGW référencée 10 permet de relier un réseau de communication local et un réseau étendu tel que le réseau Internet (non représenté). Une telle passerelle résidentielle HGW 10 intègre un serveur DHCP : elle effectue le routage des paquets de données sur le réseau, et peut également jouer le rôle de pare-feu, de proxy, de relais DNS (pour l'anglais « Domain Name Server »), de fournisseur de services IGD (pour l'anglais « Internet Gateway Device », dispositif de passerelle Internet), etc.

Elle intègre également une base de données, utilisée au cours de la phase d'apprentissage, à partir de laquelle peuvent être élaborées les règles de sécurité spécifiques à chaque objet communicant .

Dans l'exemple de la **figure 1****,** de nombreux équipements sont présents sur le réseau local, à savoir :
- un téléphone intelligent (ou « smartphone ») 11 ;
- un ordinateur portable 12 ;
- un ordinateur de type PC 13 ;
- une tablette 14 ;
- une station météo 15 ;
- une webcam 16 ;
- un thermostat 17.

Cette liste n'est bien sûr pas exhaustive, et de nombreux autres objets communicants peuvent être présents sur le réseau local de l'utilisateur.

Ces objets communicants peuvent être reliés au réseau par voie filaire (câble Ethernet, port USB (pour l'anglais « Universal Serial Bus »), etc.) ou sans fil (Wi-Fi^{®}, Bluetooth^{®}, ZigBee, Z-Wave^{®}, etc.). Ils comprennent tous types d'objets physiques, aptes à communiquer numériquement sur le réseau local, en vue d'un échange de données. Ils comprennent également les applications logicielles associées à certains objets connectés non IP (« Internet Protocol »), fonctionnant sur des technologies sans fil tels que BLE (pour « Bluetooth^{®} Low Energy »), Z-wave^{®}, Thread^{®}, etc.

En effet, l'utilisation de tels objets communicants requiert le plus souvent l'installation d'une application de gestion sur une passerelle d'accès au réseau de communication local. Une telle application s'appuie sur une machine virtuelle, ou un conteneur, à qui le serveur de configuration de paramètres d'accès (serveur DHCP) fournit une adresse IP. De tels objets communicants qui ne sont pas naturellement compatibles avec le protocole IP nécessitent la mise en œuvre d'une passerelle loT vers IP et/ou du protocole « 6LowPan ».

Ainsi, dans la suite, on désigne par objet communicant, aussi bien les objets physiques connectés au réseau que les applications logicielles « virtualisées » associées à certains de ces objets.

De tels objets communicants peuvent être désignés par l'acronyme loT, pour l'anglais « Internet of Things », en français « Internet des objets ».

Parmi les objets communicants de la **figure 1****,** on peut imaginer que le téléphone intelligent 11 et la tablette 14 aient été fournis à l'utilisateur par un Fournisseur d'Accès Internet (FAI), qui a également fourni à l'utilisateur l'équipement de terminaison de réseau que constitue la passerelle résidentielle HGW 10. De ce fait, le fournisseur d'accès connaît ces équipements 11, 14, et peut éventuellement fournir à l'administrateur du réseau de communication local des règles de sécurité prédéfinies pour ces objets communicants, qui pourraient être complétées et/ou affinées au cours de la phase d'apprentissage qui suit leur première connexion au réseau, ou la mise à jour de leur « firmware » (en français « micrologiciel »). A l'inverse, d'autres objets communicants comme la webcam 16 ou la station météo 15 peuvent provenir d'autres sources et d'autres provenances : le fournisseur d'accès peut néanmoins disposer de données résultant des interactions observées pour ces objets communicants dans d'autres réseaux locaux, qu'il aurait collectées, et qui peuvent également servir à établir des règles de sécurité pour ces objets dans le réseau de la **figure 1****.**

En tout état de cause, il est important de pouvoir établir des règles de sécurité spécifiques et applicables à chacun de ces différents objets communicants référencés 11 à 17, afin notamment d'adapter les droits alloués à ces différents objets par le serveur DHCP embarqué dans la passerelle résidentielle HGW 10, ou d'adapter les mécanismes complémentaires de limitation d'accès réseau de ces objets, tels que le firewall (en français « pare-feu »), et ce, afin d'améliorer la sécurité du réseau local vis-à-vis d'éventuelles attaques malveillantes.

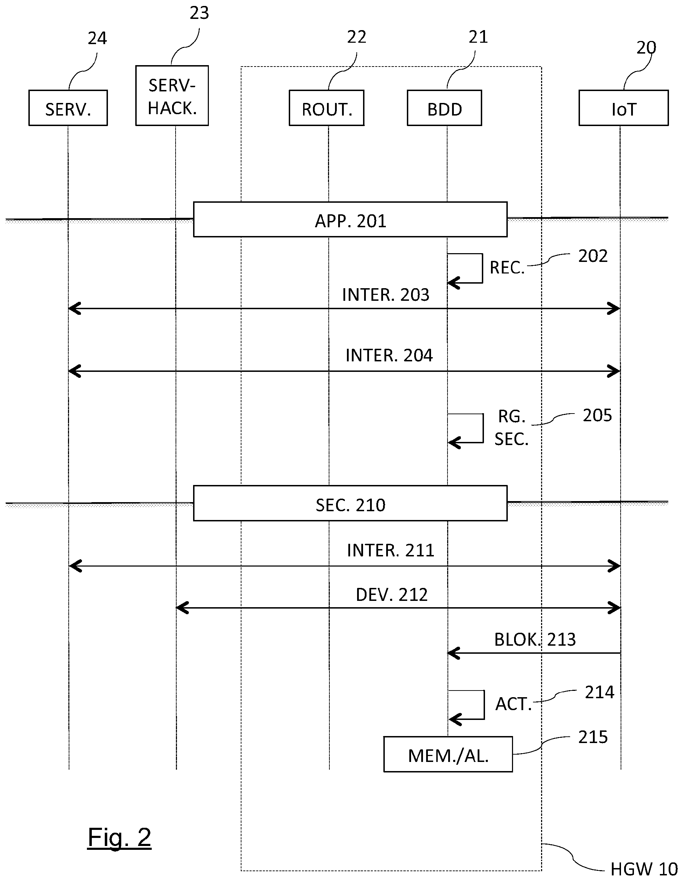

Pour ce faire, un mode de réalisation de l'invention repose sur le logigramme de la **figure 2****.**

Un objet communicant loT 20 (par exemple la webcam 16 de la **figure 1****),** présent sur le réseau domestique, vient d'être installé dans l'écosystème du réseau local par son gestionnaire. Il est dans un premier temps dépourvu d'adresse IP, et envoie donc en mode de diffusion un datagramme *DHCP DISCOVER* qui s'adresse aux serveurs DHCP présents sur le réseau local. Ce datagramme comporte notamment l'adresse physique (MAC pour Media Access Control) de l'IoT 20.

Dans l'exemple du réseau de la **figure 1****,** un unique serveur DHCP référencé 22 est présent sur le réseau local, par exemple intégré dans la passerelle résidentielle HGW 10. Il détecte ainsi la connexion de ce nouvel objet communicant loT 21 au sein du réseau de communication local (car il voir une nouvelle adresse MAC qu'il ne connaît pas), et déclenche alors une phase d'apprentissage APP. 201, au cours de laquelle les interactions de l'objet communicant loT 21 avec son écosystème réseau vont être observées, sans que soient appliquées de quelconques contraintes de sécurité spécifiques.

La détection de la présence d'un nouvel objet communicant loT 21 au sein du réseau de communication local peut également être effectuée par un service dédié qui surveille le trafic ARP (pour « Address Resolution Protocol », en français « protocole de résolution d'adresse ») et détecte une nouvelle adresse MAC qui ne figure pas dans les tables ARP du routeur.

Ces interactions de l'IoT 20 avec son environnement en mode de fonctionnement « normal » (i.e. sain ou non-malveillant) sont symbolisées sur la **figure 2** par les flèches référencées INTER. 203 et INTER. 204. Par souci de simplification, on a représenté un unique équipement SERV. 24 avec lequel l'IoT 20 interagit : cependant, cet équipement SERV. 24 peut symboliser un ou plusieurs équipements du réseau de communication local (par exemple la station météo 15, la tablette 14 ou le téléphone intelligent 11), et un ou plusieurs serveurs ou équipements distants du réseau de communication étendu, par exemple un ou plusieurs services Internet.

Toutes ces interactions de l'IoT 20 avec son environnement réseau sont mémorisées (REC. 202) par la passerelle résidentielle HGW 10 au sein d'une base de données BDD 21, intégrée dans la passerelle. Les données ainsi mémorisées comprennent le nombre d'émissions et de réceptions par l'IoT 20, la taille et la fréquence des paquets associés, les protocoles de niveau 3 et 4 du modèle OSI (pour « Open Systems Interconnection ») utilisés, les ports de communication utilisés, les adresses des équipements contactés, les serveurs accédés, etc.

La durée de collecte de ces informations peut être paramétrée, par le gestionnaire/administrateur du réseau domestique par exemple, en fonction du type d'objet communicant considéré, du mécanisme d'apprentissage (PLI, logique floue...) utilisé, d'un degré d'exigence sécuritaire... Ce paramétrage peut prendre la forme d'une durée temporelle de la phase d'apprentissage APP. 201, exprimée en heures ou en jours, ou d'un nombre de requêtes, ou d'un volume de données échangés par l'objet communicant avec les autres équipements de son entourage proche ou distant.

A l'issue d'un apprentissage profond de type « Deep Learning » sur le fondement de toutes ces données collectées pour l'IoT 20, il est possible d'obtenir un profil de comportement, ou une signature numérique, spécifiques à un objet communicant loT 20 ou à un logiciel ou micrologiciel (en anglais « firmware ») qu'il embarque.

Au cours de cette phase d'apprentissage APP. 201, il est également possible par exemple de comparer cette signature d'objet communicant et/ou de firmware, dans le nuage (en anglais « cloud »), avec d'autres signatures similaires obtenues, pour un objet communicant de même type (par exemple, même référence de webcam chez le même constructeur), dans d'autres réseaux domestiques. Cette comparaison peut être faite par un serveur dédié du réseau de l'opérateur, après envoi de cette signature, représentative de l'ensemble des données d'observation collectées pour l'IoT 20, par la passerelle résidentielle HGW 10.

De cette signature, on peut déduire un ensemble de règles de sécurité pour l'IoT 20, qui sont créées et mémorisées dans la base de données BDD 21 (étape RG. SEC. 205). Cette liste de règles de sécurité est spécifique à l'IoT 20, et applicable uniquement à cet objet communicant. Elle peut être affinée, en fonction d'un résultat de la comparaison des différentes signatures collectées pour l'IoT 20 par l'opérateur ou le fournisseur d'accès.

Cette liste de règles de sécurité permet d'exercer différents contrôles d'accès réseau de l'objet communicant loT 20 en :
- limitant le routage vers les autres équipements du réseau local de la **figure 1** ;
- limitant l'accès au réseau Internet, avec un relais DNS (pour l'anglais « Domain Name System ») limité à une liste blanche de noms de domaines ;
- limitant l'accès au réseau Internet, avec un filtrage des ports TCP/UDP (pour « Transmission Control Protocol »/ « User Datagram Protocol ») susceptibles d'être utilisés ;
- interdisant l'accès à des services de configuration, par exemple UPnP-IGD.

Une telle règle de sécurité peut par exemple prendre la forme de la restriction, pour l'IoT 20, de l'accès à un autre équipement du réseau local, par exemple l'ordinateur portable 12, sur un port TCP donné, avec un type de protocole spécifique connu, et des paquets limités en nombre et en taille.

En reprenant l'exemple, pour l'objet communicant loT 20, de la webcam 16, on peut par exemple observer, pendant la phase d'apprentissage APP. 201, qu'un comportement « normal » de la webcam 16 comprend :
- l'obtention d'une adresse IP auprès du serveur DHCP ROUT. 22 ;
- la recherche de l'heure, par requête NTP (pour « Network Time Protocol », en français « protocole d'heure réseau ») sur un serveur d'horodatage 24 du réseau de communication étendu ;
- l'envoi de flux vidéo à une adresse IP (pour « Internet Protocol ») spécifiée par le gestionnaire/utilisateur du réseau domestique, lorsque celui-ci est absent de son domicile, et que la webcam 16 est utilisée pour la surveillance du domicile.

Les règles de sécurité RG. SEC. 205 créées à l'issue de la phase d'apprentissage APP. 201 peuvent alors comprendre la création d'une liste blanche des adresses/noms de domaine autorisés, joints par la webcam 16 au cours de son fonctionnement normal (à savoir, celle du serveur d'horodatage 24, et l'adresse IP spécifiée par l'utilisateur), et la configuration d'un volume et d'une fréquence maximum d'envoi de paquets vidéo, correspondant à ce qui a été observé pendant la phase d'apprentissage pour l'envoi des flux de vidéosurveillance. Toutes les autres adresses ou noms de domaine sont « blacklistés », i.e. inscrits sur une liste noire d'adresses ou accès interdits.

On comprend que ces règles de sécurité sont spécifiques et applicables uniquement à l'IoT 20, en l'espèce la webcam 16 : en effet, les besoins en communication du téléphone intelligent 11 ou de la station météo 15 sont bien évidemment très différents de ceux de la webcam 16, tant en termes de volume de données échangées, que de serveurs et adresses auxquels accéder.

A l'issue de cette phase d'apprentissage APP. 201, l'objet communicant loT 20 entre dans une phase de fonctionnement en mode sécurité SEC. 210, régi par les règles de sécurité RG. SEC. 205 mémorisées dans la base de données BDD 21.

Au cours de cette phase de fonctionnement SEC. 210, l'objet communicant loT 20 interagit avec le serveur SERV. 24 du réseau de communication étendu, en conformité avec les règles de sécurité enregistrées dans la base de données BDD 21 : ces interactions, illustrées par double flèche INTER. 211 sur la figure 2, correspondent à des interactions dites « normales », i.e. autorisées par la passerelle résidentielle HGW 10.

En revanche, l'objet communicant loT 20 peut également tenter d'accéder à un serveur ou un équipement non utilisé habituellement (i. e. en fonctionnement « normal »), par exemple le serveur SERV. HACK. 23 sur la figure 2. Cette tentative d'accès, correspondant à un comportement potentiellement déviant de l'objet communicant loT 20, est symbolisée par la double flèche DEV. 212. L'adresse de ce serveur SERV. HACK. 23 ne figure donc pas sur la liste blanche mémorisée dans les règles de sécurité associées à l'IoT 20 dans la base de données BDD 21.

Dans ce cas, cette interaction inhabituelle est immédiatement bloquée par la passerelle résidentielle HGW 10, comme illustré par la flèche BLOK. 213. L'objet communicant loT 20 peut alors être isolé, afin d'empêcher son utilisation dans le cadre d'activités malveillantes, susceptibles de mettre en péril la sécurité du réseau domestique. Ce blocage BLOK. 213 peut s'accompagner d'une action ACT. 214 liée au problème de sécurité détecté, qui peut par exemple prendre la forme de l'émission d'une alerte vers l'utilisateur, ou de la mémorisation du comportement déviant dans un journal d'activités suspectes (MEM./AL. 215).

En reprenant l'exemple précité de la webcam 16, un tel comportement déviant DEV. 212 peut consister en l'envoi du flux de vidéosurveillance du domicile de l'utilisateur à une adresse autre que celle spécifiée par ce dernier, par exemple une adresse à l'étranger. La passerelle résidentielle HGW 10 peut alors envoyer un message d'alerte à l'utilisateur (ACT. 214) et bloquer le flux vidéo émis par la webcam 16 (BLOK. 213).

La passerelle résidentielle HGW 10 peut également détecter que la webcam 16 envoie des requêtes DNS en masse vers un serveur SERV. HACK. 23, et suspecter qu'elle participe à une attaque de Botnet (pour l'anglais, concaténation de « robot » et de « network », en français robot et réseau). Dans ce cas, elle peut couper le flux émis par la webcam 16 (BLOK. 213), mais également isoler la webcam 16 en quarantaine (ACT. 214), par exemple jusqu'à une éventuelle mise à jour de son « firmware » permettant de corriger la faille de sécurité affectant cet objet communicant.

Enfin, ce comportement déviant DEV. 212 peut également être interne au réseau de communication local. La webcam 16 peut par exemple attaquer un autre objet communicant du réseau domestique de la **figure** 1, par exemple en procédant au chiffrement intempestif des disques durs de l'ordinateur personnel 13. A nouveau, il est alors possible de bloquer l'accès de la webcam 16 à l'équipement local attaqué, et de mettre en quarantaine cet objet communicant déviant, jusqu'à correction de la faille de sécurité qui l'affecte, ou action de l'administrateur du réseau domestique (par exemple remplacement de la webcam 16 par un autre équipement réputé plus sûr assurant la même fonction).

Par ailleurs, dans un mode de réalisation de l'invention, il est également possible de procéder à un déverrouillage de la sécurité lors d'une détection de présence d'un utilisateur habilité (par exemple l'administrateur du réseau domestique, ou un utilisateur dont l'identifiant est dûment enregistré par la passerelle résidentielle HGW 10) dans le réseau domestique.

Une telle détection de présence peut reposer sur la détection du téléphone intelligent (en anglais, « smartphone ») de l'abonné sur le réseau de communication local. Elle peut aussi reposer par exemple sur la détection de mouvement au domicile, au moyen de capteurs de type Z-Wave (protocole radio conçu pour la domotique) par exemple.

Ainsi, lorsque la passerelle résidentielle HGW 10 détecte que l'utilisateur est présent à proximité d'un objet communicant du réseau de la **figure 1****,** ou plus généralement au domicile, correspondant à l'environnement du réseau domestique, elle peut décider d'alléger les règles de sécurité associées aux objets communicants loT 20, afin de faciliter l'accès aux services du réseau domestique par l'utilisateur. On part en effet du principe que, lorsque l'utilisateur est présent, il peut surveiller par lui-même le comportement des objets communicants pour détecter une éventuelle déviance, ou provoquer volontairement une interaction inhabituelle pour un objet communicant loT 20 avec son environnement réseau, sans pour autant que cette interaction inhabituelle constitue une véritable action malveillante ou une faille de sécurité.

Cet assouplissement des règles de sécurité peut consister à relever un plafond autorisé pour le volume de données échangées par l'IoT 20, à tolérer un accès à un serveur dont l'adresse ne figurerait pas sur la liste blanche des accès autorisés, etc.

A l'inverse, lorsqu'on détecte qu'un utilisateur habilité est présent dans le réseau de communication local, il est aussi possible de renforcer certaines règles de sécurité, comme par exemple pour empêcher les interactions distantes, comme la transmission de flux vidéo sur le réseau de communication étendu par des caméras locales du réseau domestique. En effet, en présence de l'utilisateur à domicile, il n'est a priori pas nécessaire de transmettre le flux de vidéosurveillance du domicile vers une adresse distante.

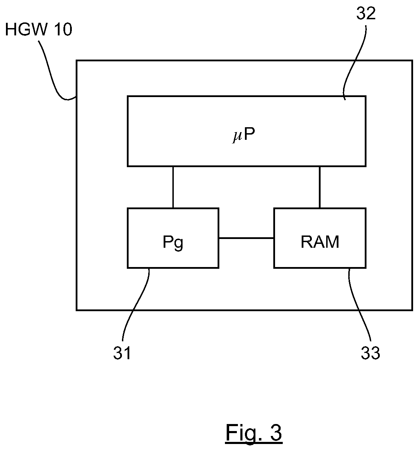

On présente désormais, en relation avec la **figure 3****,** la structure matérielle d'un équipement d'accès selon un mode de réalisation de l'invention, dans lequel cet équipement d'accès, intégrant un module d'apprentissage et un module de création de règles de sécurité associées aux objets communicants, est intégré dans une passerelle résidentielle HGW 10.

Le terme « module » peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions.

Plus généralement, une telle passerelle résidentielle HGW 10 comprend une mémoire vive 33 (par exemple une mémoire RAM), une unité de traitement 32 équipée par exemple d'un processeur, et pilotée par un programme d'ordinateur, représentatif du module de détection de nouvel objet communicant ou mis à jour, du module d'apprentissage et du module de création de règles de sécurité, stocké dans une mémoire morte 31 (par exemple une mémoire ROM ou un disque dur). A l'initialisation, les instructions de code du programme d'ordinateur sont par exemple chargées dans la mémoire vive 33 avant d'être exécutées par le processeur de l'unité de traitement 32. La mémoire vive 33 contient notamment les données collectées lors de l'observation des interactions des objets communicants avec leur environnement réseau décrites ci-avant en relation avec la **figure** 2, ainsi que, pour chaque objet communicant, l'ensemble des règles de sécurité qui sont générées par le module de création et qui sont associées à l'objet communicant à l'issue d'une phase d'apprentissage. Le processeur de l'unité de traitement 32 pilote l'enregistrement des données relatives aux interactions des objets communicants avec leur environnement réseau dans la mémoire vive 33, la compilation de ces données par le module d'apprentissage, et la création conséquente de règles de sécurité par le module de création, conformément au logigramme de la **figure 2****.** En mode de fonctionnement sécuritaire, le processeur de l'unité de traitement 32 pilote également la détection d'interactions inhabituelles, leur blocage, et le déclenchement d'actions liées au problème de sécurité détecté, conformément au logigramme de la **figure 2****.**

**La** **figure 3** illustre seulement une manière particulière, parmi plusieurs possibles, de réaliser la passerelle résidentielle HGW, afin qu'elle effectue les étapes du procédé détaillé ci-dessus, en relation avec la **figure 2****.** En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas où la passerelle résidentielle HGW 10 est réalisée avec une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

Les différents modes de réalisation ont été décrits ci-avant en relation avec une passerelle résidentielle de type Livebox^{®}, mais peuvent plus généralement être mis en œuvre dans toutes les passerelles, routeurs, serveurs DHCP, et plus généralement dans tout équipement réseau situé en coupure entre l'objet communicant et le réseau de communication étendu.

## Revendications

1. Procédé de gestion d'un réseau de communication local comprenant un équipement (10) d'accès audit réseau, et au moins un objet communicant (11-17 ; 20) disposant d'une adresse MAC, apte à être connecté audit réseau, ledit équipement d'accès (10) réalisant les étapes suivantes :
- sur détection de connexion d'un objet communicant (20) audit réseau présentant une nouvelle adresse MAC que ledit équipement d'accès ne connaît pas et/ou sur détection d'installation d'un nouveau micrologiciel sur ledit au moins un objet communicant connecté audit réseau, une phase d'apprentissage (201) mettant en œuvre une mémorisation des interactions (203, 204) de l'objet communicant concerné avec au moins un autre équipement (24) dudit réseau local et/ou au moins un équipement (24) d'un réseau de communication étendu accessible via ledit équipement d'accès (10) suivie par l'obtention sur le fondement des interactions mémorisées d'une signature numérique spécifique à l'objet communicant concerné ou au micrologiciel qu'il embarque ;
- une création (205), en fonction de ladite signature numérique obtenue, d'au moins une règle de sécurité associée audit objet communicant concerné ;
- un contrôle d'accès réseau de l'objet communicant concerné selon ladite au moins une règle de sécurité créée.

2. Procédé de gestion d'un réseau de communication local selon la revendication 1, **caractérisé en ce que** ladite au moins une règle de sécurité associée audit objet communicant comprend une liste d'au moins un équipement dudit réseau de communication local et/ou dudit réseau de communication étendu auquel ledit objet communicant est autorisé à accéder.

3. Procédé de gestion d'un réseau de communication local selon l'une quelconque des revendications 1 et 2, **caractérisé en ce que** ladite au moins une règle de sécurité associée audit objet communicant comprend un volume maximum de données que ledit objet communicant est autorisé à échanger.

4. Procédé de gestion d'un réseau de communication local selon l'une quelconque des revendications 1 à 3, **caractérisé en ce que** ladite au moins une règle de sécurité associée audit objet communicant comprend un nombre maximum de requêtes d'accès que ledit objet communicant est autorisé à émettre.

5. Procédé de gestion d'un réseau de communication local selon l'une quelconque des revendications 1 à 4, **caractérisé en ce que** ladite phase d'apprentissage a une durée paramétrable par un gestionnaire dudit réseau de communication local.

6. Procédé de gestion d'un réseau de communication local selon l'une quelconque des revendications 1 à 5, **caractérisé en ce qu'**il comprend une transmission, à au moins un équipement dudit réseau de communication étendu, de données relatives auxdites interactions observées pour ledit objet communicant.

7. Procédé de gestion d'un réseau de communication local selon l'une quelconque des revendications 1 à 6, **caractérisé en ce que** ladite création de ladite au moins une règle de sécurité tient également compte de données relatives à des interactions observées pour un objet communicant de même type que ledit objet communicant, dans au moins un autre réseau de communication local.

8. Procédé de gestion d'un réseau de communication local selon l'une quelconque des revendications 1 à 7, **caractérisé en ce que,** en cas de détection d'une interaction (212) dudit objet communicant avec au moins un autre équipement dudit réseau local et/ou au moins un équipement d'un réseau de communication étendu accessible via ledit équipement d'accès contraire à ladite règle de sécurité créée, il comprend une étape de blocage (213) de ladite interaction.

9. Procédé de gestion d'un réseau de communication local selon la revendication 8, **caractérisé en ce qu'il** comprend également une mémorisation (215) de ladite interaction bloquée dans un journal d'interactions suspectes et/ou une alerte (215) d'un utilisateur dudit objet communicant.

10. Procédé de gestion d'un réseau de communication local selon l'une quelconque des revendications 1 à 9, **caractérisé en ce qu'il** comprend une modification de ladite règle de sécurité créée, en cas de présence d'un utilisateur dudit objet communicant au sein dudit réseau de communication local.

11. Produit programme d'ordinateur comprenant des instructions de code de programme pour la mise en œuvre d'un procédé selon l'une quelconque des revendications 1 à 10, lorsqu'il est exécuté par un processeur.

12. Equipement d'accès (10) à un réseau de communication local comprenant au moins un objet communicant disposant d'une adresse MAC, apte à être connecté audit réseau, comprenant :
- un module de détection de connexion d'un objet communicant audit réseau présentant une nouvelle adresse MAC que ledit équipement d'accès ne connaît pas et/ou d'installation d'un nouveau micrologiciel sur ledit au moins un objet communicant connecté audit réseau ;
- un module d'apprentissage mettant en œuvre une mémorisation des interactions de l'objet communicant concerné avec au moins un autre équipement dudit réseau local et/ou au moins un équipement d'un réseau de communication étendu accessible via ledit équipement d'accès, suivie par l'obtention sur le fondement des interactions mémorisées d'une signature numérique spécifique à l'objet communicant concerné ou au micrologiciel qu'il embarque ;
- un module de création, en fonction de la dite signature numérique, d'au moins une règle de sécurité associée audit objet communicant concerné ;
- un module de contrôle d'accès réseau dudit objet communicant concerné selon ladite règle de sécurité créée.

13. Equipement d'accès selon la revendication 12, **caractérisé en ce qu'**il est apte à mettre en œuvre un procédé de gestion d'un réseau de communication local selon l'une quelconque des revendications 1 à 10.

14. Equipement d'accès selon l'une quelconque des revendications 12 et 13, **caractérisé en ce qu'**il est intégré dans une passerelle résidentielle (HGW).

## Patentansprüche

1. Verfahren zur Verwaltung eines lokalen Kommunikationsnetzes, das eine Zugangseinrichtung (10) zu dem Netz umfasst und mindestens ein über eine MAC-Adresse verfügendes kommunizierendes Objekt (11-17; 20), das in der Lage ist, mit dem Netz verbunden zu werden, wobei die Zugangseinrichtung (10) die folgenden Schritte ausführt:
- bei Erkennung einer Verbindung eines kommunizierenden Objekts (20) mit dem Netz, das eine neue MAC-Adresse aufweist, welche die Zugangseinrichtung nicht kennt, oder bei Erkennung der Installation einer neuen Firmware auf dem mindestens einen mit dem Netz verbundenen kommunizierenden Objekt, eine Phase des Lernens (201), die eine Speicherung der Interaktionen (203, 204) des betreffenden kommunizierenden Objekts mit mindestens einer anderen Einrichtung (24) des lokalen Netzes und/oder mindestens einer Einrichtung (24) eines Weitverkehrskommunikationsnetzes, auf das über die Zugangseinrichtung (10) zugegriffen werden kann, durchführt, gefolgt von dem Erhalten, auf der Grundlage der gespeicherten Interaktionen, einer für das betreffende kommunizierende Objekt oder für die von ihm enthaltene Firmware spezifischen digitalen Signatur;
- ein Erzeugen (205), in Abhängigkeit von der erhaltenen digitalen Signatur, mindestens einer dem betreffenden kommunizierenden Objekt zugeordneten Sicherheitsregel;
- eine Kontrolle des Netzzugangs des betreffenden kommunizierenden Objekts gemäß der mindestens einen erzeugten Sicherheitsregel.

2. Verfahren zur Verwaltung eines lokalen Kommunikationsnetzes nach Anspruch 1, **dadurch gekennzeichnet, dass** die mindestens eine dem kommunizierenden Objekt zugeordnete Sicherheitsregel eine Liste mit mindestens einer Einrichtung des lokalen Kommunikationsnetzes und/oder des Weitverkehrskommunikationsnetzes umfasst, auf welches das kommunizierende Objekt zugreifen darf.

3. Verfahren zur Verwaltung eines lokalen Kommunikationsnetzes nach einem der Ansprüche 1 und 2, **dadurch gekennzeichnet, dass** die mindestens eine dem kommunizierenden Objekt zugeordnete Sicherheitsregel ein maximales Datenvolumen umfasst, welches das kommunizierende Objekt austauschen darf.

4. Verfahren zur Verwaltung eines lokalen Kommunikationsnetzes nach einem der Ansprüche 1 bis 3, **dadurch gekennzeichnet, dass** die mindestens eine dem kommunizierenden Objekt zugeordnete Sicherheitsregel eine maximale Anzahl von Zugangsanforderungen umfasst, die das kommunizierende Objekt senden darf.

5. Verfahren zur Verwaltung eines lokalen Kommunikationsnetzes nach einem der Ansprüche 1 bis 4, **dadurch gekennzeichnet, dass** die Phase des Lernens eine durch einen Verwalter des lokalen Kommunikationsnetzes parametrierbare Dauer hat.

6. Verfahren zur Verwaltung eines lokalen Kommunikationsnetzes nach einem der Ansprüche 1 bis 5, **dadurch gekennzeichnet, dass** es eine Übertragung, an mindestens eine Einrichtung des Weitverkehrskommunikationsnetzes, von Daten bezüglich der für das kommunizierende Objekt beobachteten Interaktionen umfasst.

7. Verfahren zur Verwaltung eines lokalen Kommunikationsnetzes nach einem der Ansprüche 1 bis 6, **dadurch gekennzeichnet, dass** das Erzeugen der mindestens einen Sicherheitsregel auch Daten bezüglich von Interaktionen berücksichtigt, die für ein kommunizierendes Objekt der gleichen Art wie das kommunizierende Objekt in mindestens einem anderen lokalen Kommunikationsnetz beobachtet werden.

8. Verfahren zur Verwaltung eines lokalen Kommunikationsnetzes nach einem der Ansprüche 1 bis 7, **dadurch gekennzeichnet, dass** es, im Fall der Erkennung einer Interaktion (212) des kommunizierenden Objekts mit mindestens einer anderen Einrichtung des lokalen Kommunikationsnetzes und/oder mindestens einer Einrichtung eines Weitverkehrskommunikationsnetzes, auf das über die Zugangseinrichtung zugegriffen werden kann, die die erzeugte Sicherheitsregel verletzt, einen Schritt des Blockierens (213) der Interaktion umfasst.

9. Verfahren zur Verwaltung eines lokalen Kommunikationsnetzes nach Anspruch 8, **dadurch gekennzeichnet, dass** es auch ein Speichern (215) der blockierten Interaktion in einem Journal verdächtiger Interaktionen und/oder eine Warnung (215) eines Benutzers des kommunizierenden Objekts umfasst.

10. Verfahren zur Verwaltung eines lokalen Kommunikationsnetzes nach einem der Ansprüche 1 bis 9, **dadurch gekennzeichnet, dass** es eine Änderung der erzeugten Sicherheitsregel im Fall der Anwesenheit eines Benutzers des kommunizierenden Objekts in dem lokalen Kommunikationsnetz umfasst.

11. Computerprogrammprodukt, das Programmcodeanweisungen umfasst, die bei seiner Ausführung durch einen Prozessor das Verfahren nach einem der Ansprüche 1 bis 10 durchführen.

12. Zugangseinrichtung (10) zu einem lokalen Kommunikationsnetz, das mindestens ein über eine MAC-Adresse verfügendes kommunizierendes Objekt umfasst, das in der Lage ist, mit dem Netz verbunden zu werden, umfassend:
- ein Modul zur Erkennung einer Verbindung eines kommunizierenden Objekts mit dem Netz, das eine neue MAC-Adresse aufweist, welche die Zugangseinrichtung nicht kennt, und/oder einer Installation einer neuen Firmware auf dem mindestens einen mit dem Netz verbundenen kommunizierenden Objekt;
- ein Lernmodul, das eine Speicherung der Interaktionen des betreffenden kommunizierenden Objekts mit mindestens einer anderen Einrichtung des lokalen Netzes und/oder mindestens einer Einrichtung eines Weitverkehrskommunikationsnetzes, auf das über die Zugangseinrichtung zugegriffen werden kann, durchführt, gefolgt von dem Erhalten, auf der Grundlage der gespeicherten Interaktionen, einer für das betreffende kommunizierende Objekt oder für die Firmware, die es enthält, spezifischen digitalen Signatur;
- ein Modul zum Erzeugen, in Abhängigkeit von der digitalen Signatur, mindestens einer dem betreffenden kommunizierenden Objekt zugeordneten Sicherheitsregel;
- ein Modul zur Kontrolle des Netzzugangs des betreffenden kommunizierenden Objekts gemäß der erzeugten Sicherheitsregel.

13. Zugangseinrichtung nach Anspruch 12, **dadurch gekennzeichnet, dass** sie in der Lage ist, ein Verfahren zur Verwaltung eines lokalen Kommunikationsnetzes nach einem der Ansprüche 1 bis 10 durchzuführen.

14. Zugangseinrichtung nach einem der Ansprüche 12 und 13, **dadurch gekennzeichnet, dass** sie in ein Home Gateway (HGW) integriert ist.

## Claims

1. Method for managing a local area communication network comprising an access equipment (10) for accessing said network, and at least one communicating object (11-17; 20) having a MAC address and able to be connected to said network, said access equipment (10) carrying out the following steps:
- upon detecting connection of a communicating object (20) to said network having a new MAC address that said access equipment does not know and/or upon detecting installation of new firmware on said at least one communicating object connected to said network, a learning phase (201) that stores interactions (203, 204) of the communicating object in question with at least one other equipment (24) of said local area network and/or at least one equipment (24) of a wide area communication network accessible via said access equipment (10), followed by obtaining, on the basis of the stored interactions, a digital signature specific to the communicating object in question or to the firmware embedded therein;
- creating (205) at least one security rule associated with said communicating object in question on the basis of said obtained digital signature;
- controlling network access for the communicating object in question in accordance with said at least one created security rule.

2. Method for managing a local area communication network according to Claim 1, **characterized in that** said at least one security rule associated with said communicating object comprises a list of at least one equipment of said local area communication network and/or of said wide area communication network that said communicating object is authorized to access.

3. Method for managing a local area communication network according to either one of Claims 1 and 2, **characterized in that** said at least one security rule associated with said communicating object comprises a maximum volume of data that said communicating object is authorized to exchange.

4. Method for managing a local area communication network according to any one of Claims 1 to 3, **characterized in that** said at least one security rule associated with said communicating object comprises a maximum number of access requests that said communicating object is authorized to transmit.

5. Method for managing a local area communication network according to any one of Claims 1 to 4, **characterized in that** said learning phase has a duration able to be parameterized by a manager of said local area communication network.

6. Method for managing a local area communication network according to any one of Claims 1 to 5, **characterized in that** it comprises transmitting data relating to said interactions observed for said communicating object to at least one equipment of said wide area communication network.

7. Method for managing a local area communication network according to any one of Claims 1 to 6, **characterized in that** said creation of said at least one security rule also takes into account data relating to interactions observed for a communicating object of the same type as said communicating object, in at least one other local area communication network.

8. Method for managing a local area communication network according to any one of Claims 1 to 7, **characterized in that**, in the event of detecting an interaction (212) of said communicating object with at least one other equipment of said local area network and/or at least one equipment of a wide area communication network accessible via said access equipment that contravenes said created security rule, it comprises a step of blocking (213) said interaction.

9. Method for managing a local area communication network according to Claim 8, **characterized in that** it also comprises storing (215) said blocked interaction in a log of suspicious interactions and/or alerting (215) a user of said communicating object.

10. Method for managing a local area communication network according to any one of Claims 1 to 9, **characterized in that** it comprises modifying said created security rule if a user of said communicating object is present within said local area communication network.

11. Computer program product comprising program code instructions for implementing a method according to any one of Claims 1 to 10 when it is executed by a processor.

12. Access equipment (10) for accessing a local area communication network comprising at least one communicating object having a MAC address and able to be connected to said network, comprising:
- a module for detecting connection of a communicating object to said network having a new MAC address that said access equipment does not know and/or installation of new firmware on said at least one communicating object connected to said network;
- a learning module that stores interactions of the communicating object in question with at least one other equipment of said local area network and/or at least one equipment of a wide area communication network accessible via said access equipment, followed by obtaining, on the basis of the stored interactions, a digital signature specific to the communicating object in question or to the firmware embedded therein;
- a module for creating at least one security rule associated with said communicating object in question on the basis of said digital signature;
- a module for controlling network access for said communicating object in question in accordance with said created security rule.

13. Access equipment according to Claim 12, **characterized in that** it is able to implement a method for managing a local area communication network according to any one of Claims 1 to 10.

14. Access equipment according to either one of Claims 12 and 13, **characterized in that** it is integrated into a home gateway (HGW).
